(19) Europäisches Patentamt
European Patent Office
Office européen des brevets

(11) EP 4 704 056 A1

(12) EUROPEAN PATENT APPLICATION

(43) Date of publication:
04.03.2026 Bulletin 2026/10

(51) International Patent Classification (IPC):
G07C 5/08 (2006.01)

(21) Application number: 25195068.9

(52) Cooperative Patent Classification (CPC):
G07C 5/085

(22) Date of filing: 11.08.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 28.08.2024 KR 20240115939

(71) Applicant: Samsung Electronics Co., Ltd.
Suwon-si, Gyeonggi-do 16677 (KR)

(72) Inventors:
• LEE, Jinwook
  16677 Suwon-si, Gyeonggi-do (KR)
• LEE, Seungcheol
  16677 Suwon-si, Gyeonggi-do (KR)

(74) Representative: Kuhnen & Wacker
Patent- und Rechtsanwaltsbüro PartG mbB
Prinz-Ludwig-Straße 40A
85354 Freising (DE)

(54) **STORAGE DEVICE FOR AUTONOMOUS VEHICLE AND DATA STORING METHOD THEREOF**

(57) A storage device (1000) configured to receive write data from at least one processor (100-800) corresponding to an autonomous vehicle (10), includes a memory (1200) and a storage controller (1100) configured to receive, from the at least one processor (100-800), the write data and an accident risk tag corresponding to the write data, the accident risk tag corresponding to an accident risk level of the autonomous vehicle (10), where the accident risk tag corresponds to at least one of a first accident risk level corresponding to a high accident risk, a second accident risk level corresponding to an accident risk lower than the first accident risk level, and a third accident risk level corresponding to an accident risk lower than the second accident risk level, select a storage method for storing the write data on the memory (1200) based on the accident risk tag, and store the write data on the memory (1200) based on the selected storage method.

FIG. 2

EP 4 704 056 A1

**Description**

BACKGROUND

Embodiments of the present disclosure relate to a semiconductor device, and more specifically, to a storage device for autonomous driving and a data storage method thereof.

An autonomous vehicle may refer to a vehicle that drives to a given destination by recognizing the surrounding environment and driving environment on its own and controlling the vehicle without driver intervention. The autonomous vehicle may avoid collisions with obstacles on the driving path through various sensors installed without driver intervention. In addition, the autonomous vehicle may drive to the destination on its own by adjusting the speed and driving direction according to the shape of the road.

As research and distribution of autonomous vehicles become more generalized, identifying the cause of an accident and who is responsible when the accident involving an autonomous vehicle occurs is becoming an issue. If the cause of the accident is an error or problem in the autonomous vehicle, the responsibility for the accident will be attributed to the company that manufactured the vehicle. On the other hand, if an accident occurs when the driver has the authority to control the autonomous vehicle, the responsibility for the accident will be attributed to the driver. Therefore, when an accident involving the autonomous vehicle occurs, there is a need to secure evidence information to determine the cause of the accident or responsibility. To this end, the process of storing driving data or various sensor data acquired while driving the autonomous vehicle must be completed first.

As the autonomous driving level of the autonomous vehicle increases, the demand for collecting additional data (sensor data, driving records) in addition to the stored data (i.e., event data recorder (EDR) data) in the event of an accident is increasing. The massive amount of data collected will be used to analyze the cause of the accident or determine responsibility. A solid state drive (SSD) based on NAND flash memory is being used as one of the storages for storing data in the event of an accident. However, SSD stores data in a way that manages user data and corresponding metadata separately for performance. In other words, metadata is written to a non-volatile memory (NVM) device only when certain conditions are met separately from user data.

Smooth recovery of accident data is possible only when user data and metadata are synchronized. However, it may be inefficient to perform synchronization of user data and metadata for all data stored in SSD. In addition, as the autonomous driving level increases, applying synchronization to the sensor data becomes increasingly massive and storing it may lead to a rapid increase in cost. Therefore, a technology is needed to secure highly reliable proof information in the event of the autonomous vehicle accident while efficiently storing data.

Information disclosed in this Background section has already been known to or derived by the inventors before or during the process of achieving the embodiments of the present application, or is technical information acquired in the process of achieving the embodiments. Therefore, it may contain information that does not form the prior art that is already known to the public.

SUMMARY

One or more example embodiments provide a storage device for autonomous driving and a data storage method thereof that may be capable of efficiently storing accident records of autonomous vehicles.

Additional aspects will be set forth in part in the description which follows and, in part, will be apparent from the description, or may be learned by practice of the presented embodiments.

According to an aspect of an example embodiment, a storage device configured to receive write data from at least one processor corresponding to an autonomous vehicle, may include a memory and a storage controller configured to receive, from the at least one processor, the write data and an accident risk tag corresponding to the write data, the accident risk tag corresponding to an accident risk level of the autonomous vehicle, where the accident risk tag corresponds to at least one of a first accident risk level corresponding to a high accident risk, a second accident risk level corresponding to an accident risk lower than the first accident risk level, and a third accident risk level corresponding to an accident risk lower than the second accident risk level, select a storage method for storing the write data on the memory based on the accident risk tag, and store the write data on the memory based on the selected storage method.

According to an aspect of an example embodiment, a method of a storage device may include receiving, from a host, a write command and accident data comprising a risk tag, determining an accident risk level based on the risk tag, where the accident risk level corresponds to at least one of a first accident risk level corresponding to a high accident risk, a second accident risk level corresponding to an accident risk lower than the first accident risk level, and a third accident risk level corresponding to an accident risk lower than the second accident risk level, selecting a storage method for storing the accident data on a memory based on the accident risk level, and storing the accident data on the memory based on the selected storage method.

According to an aspect of an example embodiment, a storage device configured to store accident data may include a first memory, a buffer memory on which the accident data and metadata of the accident data are stored, and a storage controller configured to receive the accident data and an accident risk tag corresponding to the accident data, where the storage controller may include a tag analyzer configured to extract an accident risk level corresponding to the accident risk tag, a storage manager configured to select a storage method for storing the accident data on the first memory based on the extracted accident risk level, and a namespace table configured a namespace address of the first memory in which the accident data is stored, and where the accident risk tag corresponds to at least one of a first accident risk level corresponding to a high accident risk, a second accident risk level corresponding to an accident risk lower than the first accident risk level, and a third accident risk level corresponding to an accident risk lower than the second accident risk level.

BRIEF DESCRIPTION OF DRAWINGS

The above and other aspects, features, and advantages of certain example embodiments of the present disclosure will be more apparent from the following description taken in conjunction with the accompanying drawings, in which:

FIG. 1 is a diagram illustrating an autonomous vehicle equipped with a storage device according to one or more embodiments;
FIG. 2 is a block diagram illustrating the storage device of FIG. 1 according to one or more embodiments;
FIG. 3 is a block diagram illustrating the configuration of the storage controller of FIG. 2 according to one or more embodiments;
FIG. 4 is a block diagram illustrating the structure of the non-volatile memory device illustrated in FIG. 2 according to one or more embodiments;
FIG. 5 is a diagram illustrating a method for generating a risk tag in a host according to one or more embodiments;
FIG. 6 is a table illustrating an example of a method for transmitting a generated risk tag to a storage device according to one or more embodiments;
FIG. 7 is a table illustrating the configuration of the operation code field of FIG. 6 according to one or more embodiments;
FIG. 8 is a table illustrating example of a method for transmitting a risk tag to a storage device by a host according to one or more embodiments;
FIG. 9 is a flowchart illustrating a method for generating a write command performed in a host according to one or more embodiments;
FIG. 10 is a flowchart illustrating a method for storing data according to a risk tag in a storage device according to one or more embodiments;
FIG. 11 is a flowchart illustrating operation S250 according to one or more embodiments;
FIG. 12 is a diagram illustrating an example of write scheduling for low-risk write data according to one or more embodiments;
FIG. 13 is a diagram illustrating an example of write scheduling for low-risk write data according to one or more embodiments;
FIG. 14 is a flowchart illustrating operation S260 according to one or more embodiments;
FIG. 15 is a diagram illustrating a method of adding a journal of risk data to a meta unit whose number of journals exceeds a threshold among meta units according to one or more embodiments;
FIG. 16 is a flowchart illustrating operation S270 according to one or more embodiments;
FIG. 17 is a diagram illustrating an example of a method of configuring an on-demand log performed in operation S274 according to one or more embodiments;
FIG. 18 is a flowchart illustrating an example of a data storage method according to a risk tag in a storage device according to one or more embodiments;
FIG. 19 is a block diagram illustrating a storage device according to one or more embodiments; and
FIG. 20 is a block diagram illustrating a storage device according to one or more embodiments.

DETAILED DESCRIPTION

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms.
As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

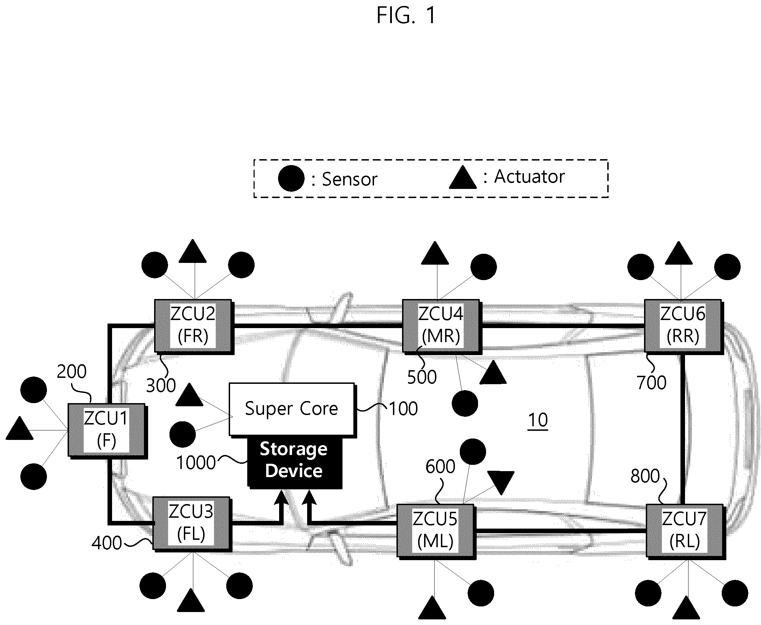

FIG. 1 is a diagram illustrating an autonomous vehicle equipped with a storage device according to one or more embodiments. Referring to FIG. 1, the autonomous vehicle 10 may include a plurality of processors 100, 200, 300, 400, 500, 600, 700 and 800) and a storage device 1000, each of which is connected to a plurality of sensors and actuators.

The autonomous vehicle 10 may detect a road, surrounding environment, obstacles, etc. through a plurality of sensors. The autonomous vehicle 10 may sense motion information such as speed, acceleration, altitude, and rotation rate detected during operation using a plurality of sensors. The plurality of sensors may include an object detection device, an internal camera, and a status detection sensor. The object detection device may detect external objects of the autonomous vehicle 10 and generate sensor data including information about the external objects. For example, the object detection device may include a vision sensor such as a camera, a radar, a lidar sensor, etc. The internal camera may detect a driver or a passenger and generate sensor data including information about the driver or passenger. The state detection sensor may sense the state of the autonomous vehicle 10 and generate sensor data including state information of the autonomous vehicle 10. For example, the state detection sensor may include at least one of an inertial navigation system (INS) sensor, a collision sensor, a wheel sensor, a speed sensor, a tilt sensor, a weight detection sensor, a heading sensor, a position module, a vehicle forward/backward sensor, a battery sensor, a fuel sensor, a tire sensor, a steering sensor, a vehicle internal temperature sensor, a vehicle internal humidity sensor, an ultrasonic sensor, an illuminance sensor, an accelerator pedal position sensor, and a brake pedal position sensor. As illustrated, sensor data detected by the sensors is provided to processors (Super core and ZCU1 to ZCU7). In addition, it may be possible to operate equipment based on the sensing results by using a plurality of actuators.

The processors 100 to 800 may control the overall operation of electronic devices provided in the autonomous vehicle 10. The processors 100 to 800 may process sensor data provided from multiple sensors and drive actuators or generate event data based on the processing results. For example, the processors 100 to 800 may collect sensor data provided from camera sensors or LIDAR sensors to provide advanced driver assistance system (ADAS) or automatic driving system (ADS) functions such as forward collision warning or forward collision prevention. Alternatively, the processors 100 to 800 may provide lane keeping assist system (LKAS) functions that assist the autonomous vehicle 10 to not deviate from its lane while driving using sensor data.

In particular, the processors 100 to 800 may include a zone control unit (ZCU) that controls individual zones for controlling the autonomous vehicle 10. As the centralization and electrification of semiconductors used in autonomous vehicle 10 are accelerating, an architecture that controls autonomous vehicle 10 by dividing them into zones may be implemented. For example, the control area of an autonomous vehicle 10 may be divided into front F, front left FL, front right FR, middle left ML, middle right MR, read left RL, and rear right RR. ZCUs 200 to 800 may be in charge of sensing and control for each divided area. One super core 100 that manages these ZCUs 200 to 800 may be provided.

The processors 100 to 800 may obtain data from sensors. In particular, at least one of the processors 100 to 800 may process the sensed data to determine the risk of an accident. For example, at least one of the processors 100 to 800 that perform the ADAS function may determine the expected time to collision (TTC) using the sensor data. The risk of an accident may be determined from the derived TTC, forward collision warning system (FCWS), rear-end collision, front lane change vehicle (Cut-in), side offset, etc. The risk of an accident may be generated as, for example, at least three risk levels including Low, Middle and High. When the risk of an accident is identified, at least one of the processors 100 to 800 may provide a command, flag, or control signal including the risk of the accident information to the storage device. Hereinafter, the risk of the accident information will be referred to as a risk tag R-tag.

The storage device 1000 may receive and store event data and sensor data provided from the processors 100 to 800. According to one or more embodiments, the storage device 1000 may process data requested to be written according to the risk tag R-tag. For example, the storage device 1000 may apply a different storage method to the data requested to be written according to the risk tag. In the case of write data accompanied by a tag with a high accident risk, the storage device 1000 may configure user data and metadata in the form of a single log and store them in a separately designated storage area at high speed. The user data and metadata configured as a single log or write unit are hereinafter referred to as an on-demand log (ODL). In the case of write data accompanied by a tag with a low accident risk, the storage device 1000 may assign an internal stream ID to the accident data and store it in a superblock to efficiently manage it, or process it by scheduling it with a high priority in the queue of the write buffer. In addition, in the case of write data accompanied by a tag with a middle accident risk, the storage device 1000 may maintain synchronization between the user data and metadata and flush the write data to a non-volatile memory device. Alternatively, the storage device 1000 processes the write data accompanied by the tag with the middle accident risk in a forced unit access (FUA) manner. However, the input/output function in the namespace of the write data must be maintained. The processing method of the write data according to the risk tag R-tag of the storage device 1000 will be described in more detail below.

In the autonomous vehicle 10 equipped with the storage device 1000 according to one or more embodiments, a large amount of accident data is processed according to different storage methods according to the accident risk. Therefore, the storage efficiency and data reliability of the accident data stored in the storage device 1000 may be improved.

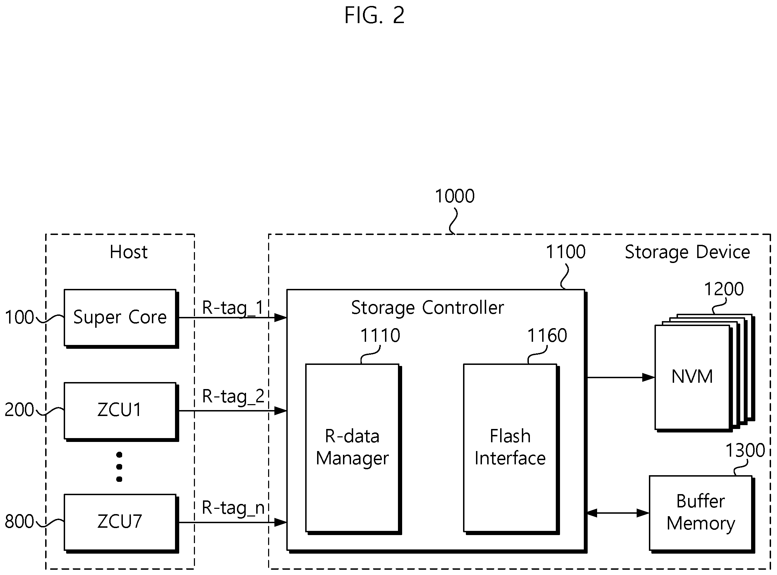

FIG. 2 is a block diagram illustrating the storage device of FIG. 1 according to one or more embodiments. Referring to FIG. 2, the storage device 1000 may receive a write request including a risk tag R-tag from a plurality of processors 100 to 800 corresponding to the host. Here, a write request unrelated to risk may not include a risk tag R-tag.

Each of the plurality of processors 100 to 800 may perform an accident risk prediction operation based on sensor data. Then, at least one of the plurality of processors 100 to 800 may determine the accident risk as a result of the accident risk prediction operation. Then, a risk tag R-tag may be generated based on the determined accident risk. The risk tag R-tag may be included in a write command of event data and transmitted to the storage device 1000. That is, the first risk tag R-tag_1 generated by the accident risk prediction operation of the super core 100 may be included in the write command of the corresponding user data and transmitted to the storage device 1000. On the other hand, in the case of general write data that is not related to the accident risk, a write request may be made through a write command without a risk tag R-tag. The risk tags R-tag_2 to R-tag_n generated as a result of the accident risk prediction operation of each of the ZCUs 200 to 800 may also be transmitted to the storage device 1000 in the same manner as the super core 100.

The storage device 1000 may include a storage controller 1100, a non-volatile memory device 1200 (NVM in FIG. 2), and a buffer memory 1300. In addition, the storage controller 1100 may include a risk data manager 1110 and a flash interface 1160. The non-volatile memory device 1200 may store data and metadata requested to be written by the host. In addition, the buffer memory 1300 may store and manage physical address information of the non-volatile memory device 1200 for the ODL by configuring a lookup table.

The storage controller 1100 may store various data provided from the processors 100 to 800 in the non-volatile memory device 1200. The non-volatile memory device 1200 configured with flash memory generally may have a characteristic that overwriting is impossible or not permitted and more data than the data requested to be written is written to the memory cell. This characteristic is called the write amplification factor (WAF). In order to minimize the WAF and the degradation of write performance, the storage controller 1100 may have a write characteristic that stores the write-requested user data and the corresponding metadata at different times. However, this method of managing write data acts as a factor that makes it difficult to recover the accident data in the event of an accident. That is, data saved in the event of an accident must be guaranteed to be smoothly recovered only when synchronization of user data and metadata is guaranteed.

According to one or more embodiments, the risk data manager 1110 of the storage controller 1100 may differentially process data requested to be written from the host according to the risk tag R-tag. That is, the risk data manager 1110 may apply a different storage method to the data requested to be written according to the risk tag R-tag. The flash interface 1160 may store the write data for each risk configured in the risk data manager 1110 in the non-volatile memory device 1200.

For example, when receiving a write request for data with the risk tag R-tag of "high" from the super core 100, the risk data manager 1110 may configure the user data and metadata into one ODL. The risk data manager 1110 may configure the ODL with a page size, which is a write unit of the non-volatile memory device 1200. The ODL may be assigned a separate namespace. In addition, the risk data manager 1110 may program the configured ODL into a separate namespace area provided in the non-volatile memory device 1200. The area where the ODL is stored may be managed in the form of a lookup table so that it may be designated by the risk data manager 1110 without a separate address mapping operation. In addition, the risk data manager 1110 may encrypt the ODL using a key or add a checksum or a cyclic redundancy check (CRC) in order to ensure the security performance or error performance of the ODL. And the risk data manager 1110 may exclude read failure even if an error occurs during a read operation for the ODL. This is because the write operation may be performed incompletely due to impact or the environment when storing accident data.

If a write request for data with a risk tag R-tag of "low" is received from the ZCU 200, the risk data manager 1110 may store the data requested to be written by imposing an internal stream identifier. Or, the risk data manager 1110 may schedule the queue priority of the data requested to be written to "high" in the write buffer.

On the other hand, if a write request for data with a risk tag R-tag of "middle" is received from the ZCU 300, the risk data manager 1110 may maintain synchronization between user data and metadata as the risk increases and quickly flush the write data to the non-volatile memory device 1200. To this end, the risk data manager 1110 may select a meta unit among the meta units (journal data and metadata) configured in the write buffer, in which the number of journal data is greater than or equal to a threshold TH. The journal of the data requested to be written may be created and inserted into the selected meta unit to configure the meta unit, and the configured meta unit may be flushed to the non-volatile memory device 1200. If there is no meta unit among the meta units in which the number of journal data is greater than or equal to the threshold TH, the journal of the data requested to be written may be inserted by selecting the meta unit with the largest number of journal data. In this case, flushing of the accident data may be possible while the input/output using the namespace of the write data is not blocked and is activated.

The function of the storage device 1000 according to one or more embodiments has been described above. The risk data manager 1110 according to one or more embodiments may differentially process data requested to be written from the host according to a risk tag R-tag. That is, the risk data manager 1110 may apply different storage methods to the data requested to be written according to the risk tag R-tag. Accordingly, the storage efficiency and data reliability of the accident data stored in the storage device 1000 may be improved.

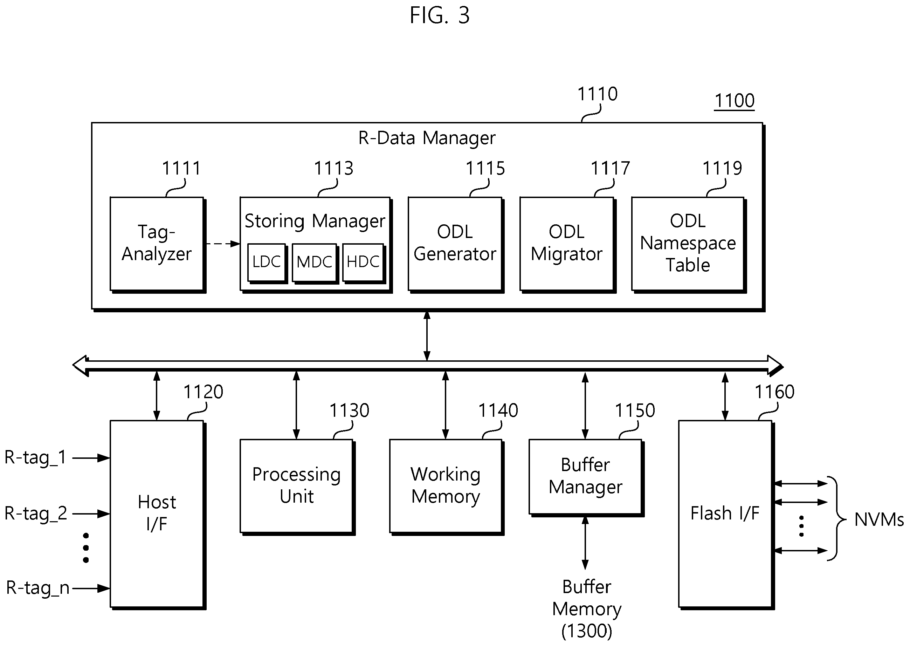

FIG. 3 is a block diagram illustrating the configuration of the storage controller of FIG. 2 according to one or more embodiments. Referring to FIG. 3, the storage controller 1100 may include a risk data manager 1110, a host interface 1120, a processing unit 1130, a working memory 1140, a buffer manager 1150, and a flash interface 1160.

The risk data manager 1110 may extract a risk tag R-tag included in a command from a host, and determine a storage method of the data requested to be written into a non-volatile memory device 1200 according to the extracted risk tag R-tag. The risk data manager 1110 may include a tag analyzer 1111, a storing manager 1113, an ODL generator 1115, an ODL migrator 1117, and an ODL namespace table 1119 for processing write data according to the risk tag R-tag.

The tag analyzer 1111 may extract and analyze the risk tag R-tag included in the command provided from multiple processors 100 to 800 of the host. For example, the multiple processors 100 to 800 may add the risk tag R-tag to an operation code (hereinafter, interchangeably referred to as Opcode) of a command format for transmitting a write request and provide it to the storage device 1000. Alternatively, multiple processors 100 to 800 may transmit the risk tag R-tag to the storage device 1000 using a specific field of a direct send command. The transmission method of the risk tag R-tag is not limited to the above-described example, and may be transmitted through various control signals or flags. If a tag included in a write request corresponds to the risk tag R-tag, the tag analyzer 1111 may transmit the extracted risk tag to the storing manager 1113.

The storing manager 1113 may select a data storage method that varies depending on the risk degree of the data requested to be written provided through the risk tag R-tag. For this purpose, the storing manager 1113 may include a low-risk controller LDC, a medium-risk controller MDC, and a high-risk controller HDC.

The low-risk controller LDC may be activated when the risk degree of the data requested to be written is low. For low-risk write data, the write priority to the non-volatile memory device 1200 may be scheduled higher than that of other general data (data that does not include the risk tag) that was previously written. The low-risk controller LDC may manage the metadata of the low-risk write data by writing the meta unit to the non-volatile memory device 1200 when the journal buffer of the meta unit becomes full. In other words, the metadata of the low-risk write data may be managed in the same manner as the metadata of general write data. However, in order to schedule the priority of the low-risk write data, the low-risk controller LDC may impose an internal stream identifier on the write data. The low-risk controller LDC may reschedule the priority of the write data to an urgent task or adjust it to a higher priority than other urgent tasks. However, since all urgent tasks should not be pushed down in priority, the low-risk controller LDC may manage the low-risk write data and the urgent task by adjusting them in a specific ratio.

The medium-risk controller MDC may be activated when the risk degree of the data requested to be written is medium. In the case of medium-risk write data, the medium-risk controller MDC may perform a management operation to maintain synchronization between user data and metadata and quickly flush the write data to the non-volatile memory device 1200. The medium-risk controller MDC may select a meta unit (journal data and metadata) configured in the write buffer whose amount or number of journal data is greater than a threshold TH. The journal of the write data may be inserted into the selected meta unit to configure the meta unit, and the configured meta unit may be flushed to the non-volatile memory device 1200. If there is no meta unit among the meta units whose number or amount of journal data is greater than the threshold TH, the journal of the data requested to be written may be inserted by selecting the meta unit with the largest number of journal data. In this case, flushing of the accident data may be possible while the input/output using the namespace of the write data is not blocked and is activated.

The high-risk controller HDC may be activated when the risk degree of the data requested to be written is high. The write data with high risk may be written to the non-volatile memory device 1200 with the highest priority. In addition, if the user data and the metadata are managed separately, such as low-risk or medium-risk data, consistency may not be guaranteed during recovery. Therefore, the user data and metadata of the high-risk write data may be configured as a single write unit to maintain consistency. Hereinafter, such a single write unit will be referred to as an ODL.

The high-risk controller HDC may request the ODL generator 1115 to configure the ODL for the high-risk write data. The ODL may be configured as a page unit, which is a write unit, to be written at high speed to the non-volatile memory device 1200. That is, the ODL generator 1115 may configure the user data and metadata of the high-risk write data as a single-page or multi-page sized ODL. The data format and configuration of the ODL will be described in more detail through the drawings described below.

The physical address information where the ODL generated by the ODL generator 1115 is to be stored may be stored in the ODL namespace table 1119. The ODL written in the ODL namespace table 1119 may be allocated to the memory area of the non-volatile memory device 1200 specified in the corresponding namespace without a separate address mapping procedure. The physical address information written in the ODL namespace table 1119 may include, for example, the channel, way, block, page address, etc. of the allocated namespace.

The ODL migrator 1117 may migrate the ODL stored in the ODL namespace area to the meta area and the user area when a case where the risk tag R-tag does not exist in a write command continues for a specific period of time.

The host interface 1120 may provide an interface between the host corresponding to the plurality of processors 100 to 800 and the storage controller 1100. The host and the storage controller 1100 may be connected through one of various standardized interfaces. Here, the standardized interfaces include various interface methods such as Advanced Technology Attachment (ATA), Serial ATA (SATA), external SATA (e-SATA), Small Computer Small Interface (SCSI), Serial Attached SCSI (SAS), Peripheral component Interconnection (PCI), PCI Express (PCIe), Universal Serial Bus (USB), IEEE 1394, Universal Flash Storage (UFS), Embedded Multi Media Card (eMMC), NVMe, NVMe-of, NVMe-MI, etc.

The processing unit 1130 may include a central processing unit or a microprocessor. The processing unit 1130 may drive software or firmware for driving the storage controller 1100. In particular, the processing unit 1130 may drive software modules loaded into the working memory 1140. In addition, the processing unit 1130 may execute core functions of the storage device 1000, such as the flash translation layer (FTL). In addition, the processing unit 1130 may be provided in a multi-core form composed of multiple central processing units (CPUs). In one or more embodiments, the risk data manager 1110 may be loaded into the working memory 1140 in the form of firmware or software. The processing unit 1130 executes the risk data manager 1110 loaded into the working memory 1140, thereby enabling variable data storage according to the risk level of the present invention.

Software modules or data for controlling the storage controller 1100 may be loaded into the working memory 1140. Software and data loaded into the working memory 1140 may be driven or processed by the processing unit 1130. The working memory 1140 may be implemented, for example, as static random access memory (RAM) (SRAM).

The buffer manager 1150 may provide a buffer function of read data or write data moving between the host interface 1120 and the flash interface 1160. The buffer manager 1150 may control a buffer memory (1300, see FIG. 2) implemented as a large-capacity dynamic RAM (DRAM) to provide a direct memory access (DMA) function or a buffer function between the non-volatile memory device 1200 and the host. An ODL namespace table 1119 may be configured, stored, and updated in the buffer memory 1300.

The flash interface 1160 may provide an interface between the storage controller 1100 and the non-volatile memory device 1200. For example, data processed by the processing unit 1130 may be stored in the non-volatile memory device 1200 through the flash interface 1160. As another example, data stored in the non-volatile memory device 1200 may be exchanged with the storage controller 1100 through the flash interface 1160.

In the above, exemplary configurations of the storage controller 1100 have been described. However, it will be well understood that the components of the storage controller 1100 are not limited to the components mentioned above. For example, the storage controller 1100 may further include a read only memory (ROM) that stores code data required for booting operation or an error correction code block.

Data requested to be written from the host according to the operation of the risk data manager 1110 according to one or more embodiments may be programmed in the non-volatile memory device 1200 in different storage methods according to the risk tag R-tag. Accordingly, the storage efficiency and data reliability of accident data stored in the storage device 1000 may be improved.

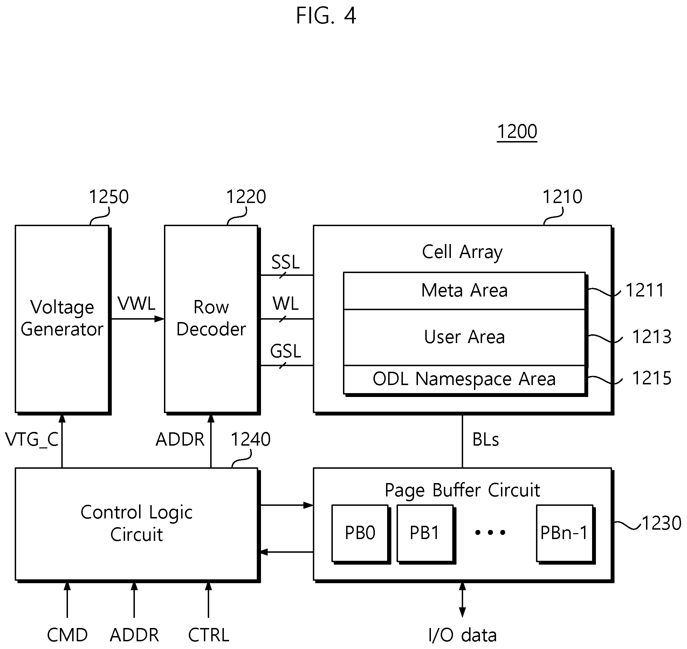

FIG. 4 is a block diagram illustrating the structure of the non-volatile memory device illustrated in FIG. 2 according to one or more embodiments. Referring to FIG. 4, the structure of one non-volatile memory device 1200 implemented as a flash memory device is illustrated. The non-volatile memory device 1200 may include a cell array 1210, a row decoder 1220, a page buffer circuit 1230, a control logic circuit 1240, and a voltage generator 1250. The non-volatile memory device 1200 may further include a data input/output circuit or an input/output interface. In addition, the non-volatile memory device 1200 may further include elements such as a column logic, a pre-decoder, a temperature sensor, a command decoder, and an address decoder.

The cell array 1210 may include a plurality of memory blocks. Each of the plurality of memory blocks may include a plurality of memory cells. A plurality of memory blocks may be included in one memory plane, but embodiments not limited thereto. The cell array 1210 may be connected to the page buffer circuit 1230 through bit lines BL and may be connected to the row decoder 1220 through word lines WL, string select lines SSL, and ground select lines GSL. In one or more embodiments, the cell array 1210 may include a three-dimensional memory cell array.

The cell array 1210 may include a meta area 1211 where metadata and journal data are stored and a user area 1213 where user data is stored. User data requested to be written by the risk data manager (1110, see FIG. 3) may be stored in the user area 1213. On the other hand, metadata managed in meta unit units may be programmed in the meta area 1211 in stripe units. In particular, the cell array 1210 may include an ODL namespace area 1215 in which an ODL generated from high-risk write data is stored. The ODL stored in the ODL namespace area 1215 may be migrated if a case in which idle time or a risk tag R-tag does not exist continues for a certain period of time. That is, the ODL stored in the ODL namespace area 1215 may be moved to the meta area 1211 and the user area 1213 by migration.

The row decoder 1220 may select any one of the memory blocks of the cell array 1210 in response to the address ADDR. The row decoder 1220 may select any one of the word lines of the selected memory block in response to the address ADDR. The row decoder 1220 may transmit a voltage VWL corresponding to the operation mode to the word line of the selected memory block. During a program operation, the row decoder 1220 may transmit a program voltage and a verification voltage to the selected word line, and a pass voltage to the non-selected word line. During a read operation, the row decoder 1220 may transmit a read voltage to the selected word line, and a read pass voltage to the non-selected word line.

The page buffer circuit 1230 may include a plurality of page buffers PB0 to PBn-1. The plurality of page buffers PB0 to PBn-1 may be respectively connected to the memory cells through a plurality of bit lines BLs. The page buffer circuit 1230 may select at least one bit line among the bit lines BLs in response to a column address. The page buffer circuit 1230 may operate as a write driver or a sense amplifier depending on the operation mode. For example, during the program operation, the page buffer circuit 1230 may apply a bit line voltage corresponding to data to be programmed to a selected bit line. During a read operation, the page buffer circuit 1230 may detect data stored in a memory cell by detecting the current or voltage of the selected bit line.

The control logic circuit 1240 may control various operations in the non-volatile memory device 1200. The control logic circuit 1240 may output various control signals for programming data in the cell array 1210, reading data from the cell array 1210, or erasing data stored in the cell array 1210 in response to a control signal CTRL, a command CMD, and/or an address ADDR. For example, the control logic circuit 1240 may output a voltage control signal VTG_C, the address ADDR, etc. In one or more embodiments, the control logic circuit 1240 may output control signals for programming multi-bit data according to the received control signal CTRL, command CMD, and/or address ADDR.

The voltage generator 1250 may generate various types of voltages for performing program, read, and erase operations based on the voltage control signal VTG_C. For example, the voltage generator 1250 may generate a program voltage, a read voltage, a program verification voltage, etc. as a word line voltage VWL. For example, the program voltage may be generated in an incremental step pulse program (ISPP) manner.

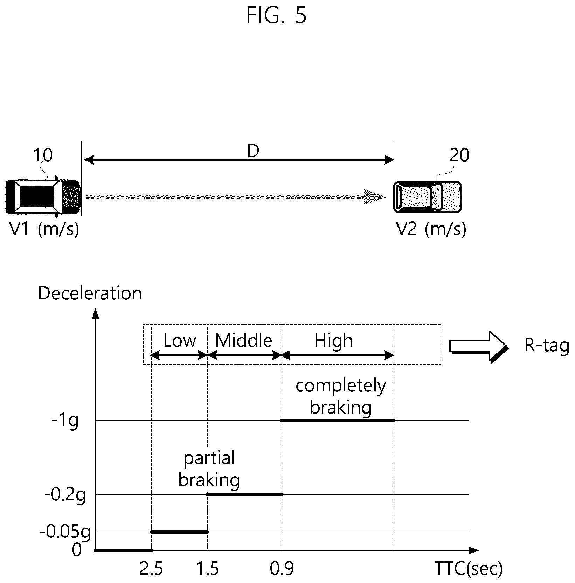

FIG. 5 is a diagram illustrating a method for generating a risk tag in a host according to one or more embodiments. Referring to FIG. 5, at least one of the plurality of processors 100 to 800 may determine a time to collision (TTC) and generate a risk tag R-tag based on the result.

At least one of the plurality of processors 100 to 800 may detect the relative distance D and relative speed (V1-V2) between the autonomous vehicle 10 and the preceding vehicle 20. Then, the detected relative distance D and relative speed (V1-V2) may be used to determine the TTC based on Equation (1).

$$TTC = \frac{Relative\ Distance}{Relative\ velocity} = \frac{D}{V1 - V2} \qquad (1)$$

In the illustrated graph of FIG. 5, it may be confirmed that the deceleration of the autonomous vehicle 10 increases as the TTC becomes shorter. For example, when the TTC is between 2.5 seconds and 1.5 seconds, the partial braking of the autonomous vehicle 10 begins. And when the TTC is less than 0.9 seconds, the autonomous vehicle 10 may perform a complete braking for deceleration.

The risk tag R-tag may be determined according to the TTC. For example, when the TTC is longer than 2.5 seconds, the host does not generate the risk tag R-tag. In this case, the host may issue a write command in which the risk tag R-tag is not inserted. When the TTC is between 2.5 seconds and 1.5 seconds, the host may generate the risk tag R-tag as 'Low'. The host may add the risk tag R-tag corresponding to 'Low' to the write command and transmit it to the storage device 1000.

If the TTC is between 1.5 seconds and 0.9 seconds, the host may generate the risk tag R-tag as 'Middle'. Then, the host may add the risk tag R-tag corresponding to 'Middle' to the write command and transmit it to the storage device 1000. If the TTC is less than 0.9 seconds, the host may generate the risk tag R-tag as 'High'. Then, the host may add the risk tag R-tag corresponding to 'High' to the write command and transmit it to the storage device 1000.

In the above, the method of generating the risk tag R-tag based on the TTC has been briefly described. However, in general, the risk tag R-tag may not depend only on the TTC. In order to generate the risk tag R-tag, the host may combine various sensor data such as the expected TTC, FCWS, LKAS, rear side collision, front lane change vehicle (Cut-in) detection, and side offset.

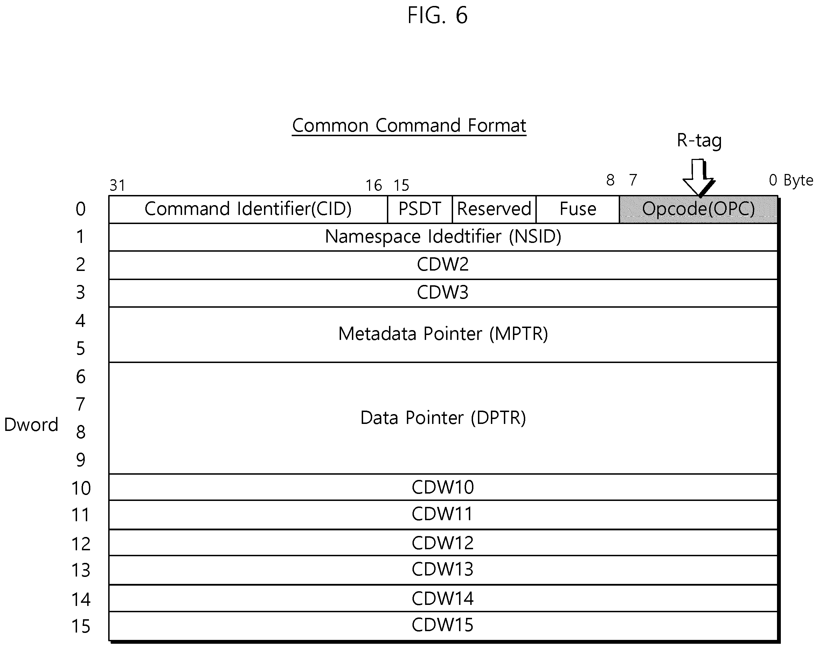

FIG. 6 is a table illustrating an example of a method for transmitting a generated risk tag to a storage device according to one or more embodiments. Referring to FIG. 6, a common command format used in an NVMe interface is illustrated as an example. In the common command format, the risk tag R-tag may be inserted into the operation code Opcode field.

A host corresponding to at least one of the plurality of processors 100 to 800 may generate a command format for transmitting a write request after generating the risk tag R-tag. The host may insert the risk tag R-tag into the operation code Opcode field assigned to 'Dword 0' of the command format. The remaining fields of the command format for transmitting the risk tag R-tag may be the same as the common command format. Therefore, the namespace identifier NSID, metadata pointer MPTR, data pointer DPTR, etc. may be configured in the same manner as the general write command.

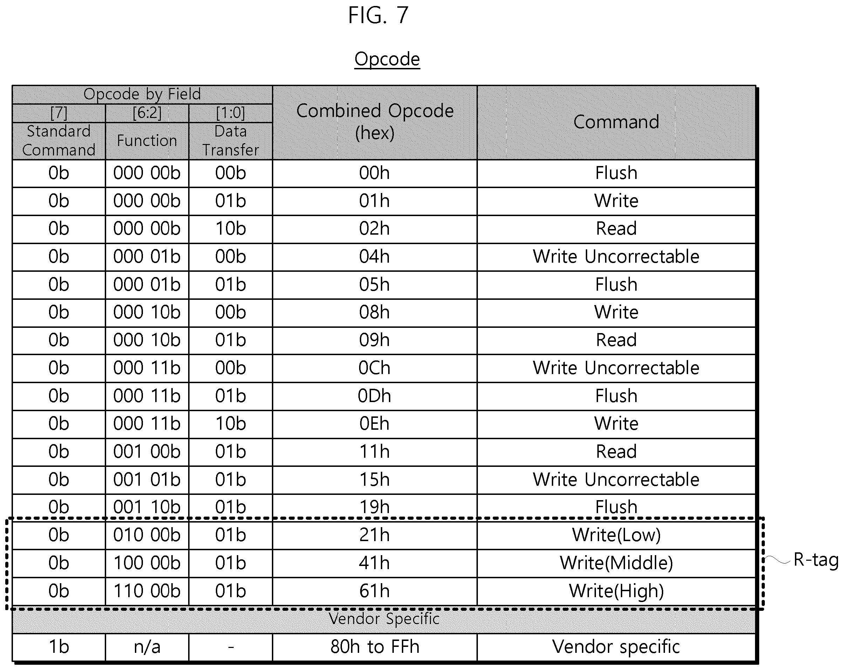

FIG. 7 is a table illustrating the configuration of the operation code field of FIG. 6 according to one or more embodiments. Referring to FIG. 7, the risk tag R-tag according to one or more embodiments may be inserted into the operation code Opcode field configured in the first byte 'Byte 0' of 'Dword 0'.

The first two bits [1:0] of the operation code Opcode configured in one byte unit may indicate the data transfer direction. For example, if the data transfer direction [1:0] is '00b', it may indicate no data transfer. If the data transfer direction [1:0] is '01b', it may indicate that the data is transferred from the host to the storage controller. If the data transfer direction [1:0] is '10b', it may indicate data transfer from the storage controller to the host. The five bits [6:2] of the operation code Opcode may indicate the function. The last bit [7] of the operation code Opcode may indicate the command type. That is, the last bit [7] of the operation code Opcode may indicate whether it is a standard command '0b' or a vendor-specific command '01b'.

The risk tag R-tag according to one or more embodiments may be transmitted using the reserved field or unused field of the operation code Opcode. For example, in the case of '00100001b' of the operation code Opcode (corresponding to '21h'), it may indicate a low-risk data write request. In the case of '01000001b' of the operation code Opcode (corresponding to '41h'), it may indicate a medium-risk data write request. And in the case of '01100001b' of the operation code Opcode (corresponding to '61h'), it may indicate a high-risk data write request.

The method of assigning the risk tag R-tag to the reserved field of the operation code Opcode is exemplarily described. However, it will be well understood that the bit values of these specific operation code Opcode are only examples and various changes or adjustments are possible.

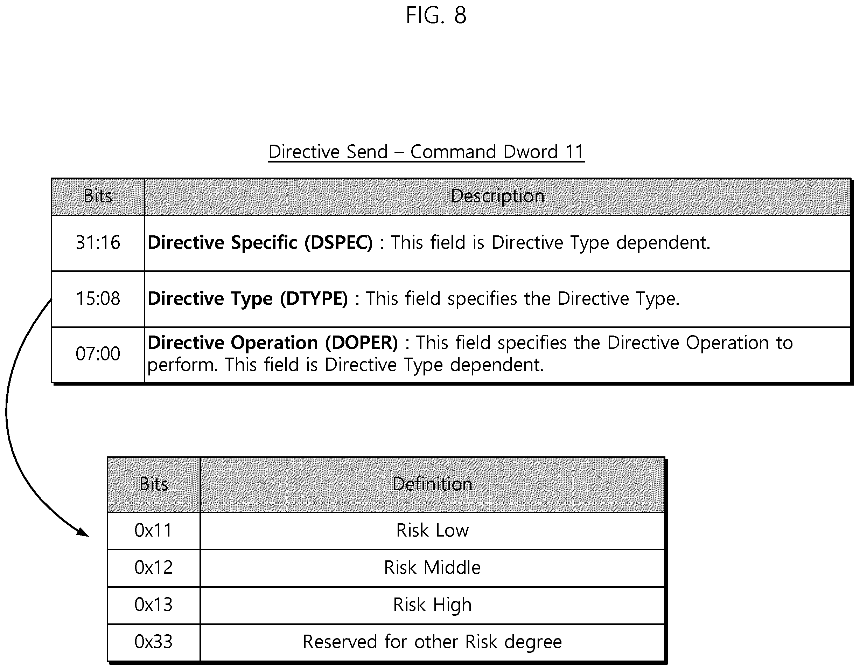

FIG. 8 is a table illustrating an example of a method for transmitting a risk tag to a storage device by a host according to one or more embodiments. FIG. 8 shows a direct send command used in an NVMe interface as an example. In the direct send command, the risk tag R-tag may be inserted into the direct send type 'DTYPE' field defined in bits [15:08].

A host may define the risk tag R-tag using the bit value of the Direct Transfer Type 'DTYPE' field. For example, a bit value of '0x11' in the Direct Transfer Type 'DTYPE' field may indicate a low-risk data write request. A bit value of '0x12' in the Direct Transfer Type 'DTYPE' field may indicate a medium-risk data write request. And a bit value of '0x13' in the Direct Transfer Type 'DTYPE' field may indicate a high-risk data write request. The remaining bit values of the Direct Transfer Type 'DTYPE' field (e.g., 0x33) may be left as reserve fields for defining more detailed risks.

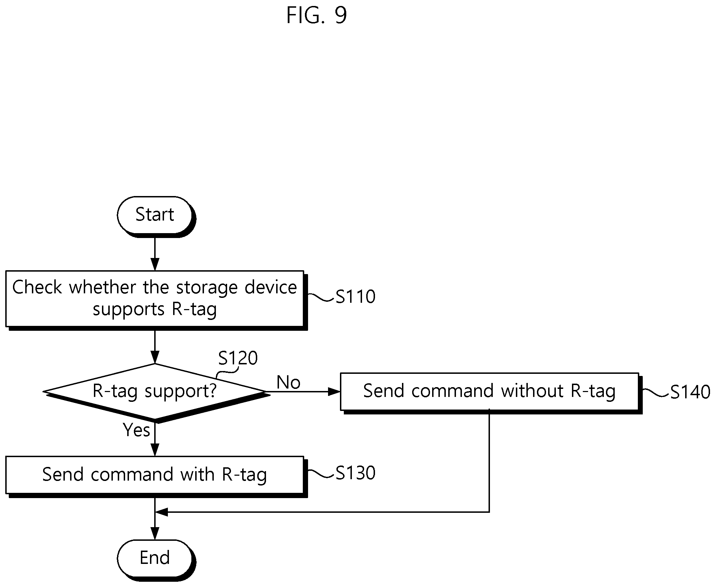

FIG. 9 is a flowchart illustrating a method for generating a write command performed in a host according to one or more embodiments. Referring to FIG. 9, at least one of the plurality of processors 100 to 800 may perform an accident risk prediction operation based on sensor data. Then, the host may transmit a risk tag R-tag generated according to the result of the accident risk prediction operation to the storage device 1000.

In operation S110, the host may check whether the storage device 1000 supports the risk tag R-tag. In the case of a storage device 1000 that does not support the risk tag R-tag, the adjustment of the data storage method according to the risk tag R-tag may not be applied.

In operation S120, an operation branch may occur depending on whether the risk tag R-tag is supported. If the storage device 1000 supports the risk tag R-tag ('Yes' direction), the procedure may move to operation S130. On the other hand, if the storage device 1000 does not support the risk tag R-tag ('No' direction), the procedure may move to operation S140.

In operation S130, the host may insert the risk tag R-tag generated according to the result of the accident risk prediction operation into the write command or may transmit it to the storage device 1000 using a direct transmission method. Then, the storage device 1000 may change the storage method of the data requested to be written into the non-volatile memory device 1200 according to the value of the risk tag R-tag.

In operation S140, the host may transmit the write command to the storage device 1000 without inserting the risk tag R-tag. In this case, the storage device 1000 may separate the metadata and the user data and store them in the non-volatile memory device 1200 regardless of the risk tag R-tag.

That is, according to one or more embodiments, the host may determine whether to insert the risk tag R-tag into a command depending on whether the storage device 1000 supports the risk tag R-tag.

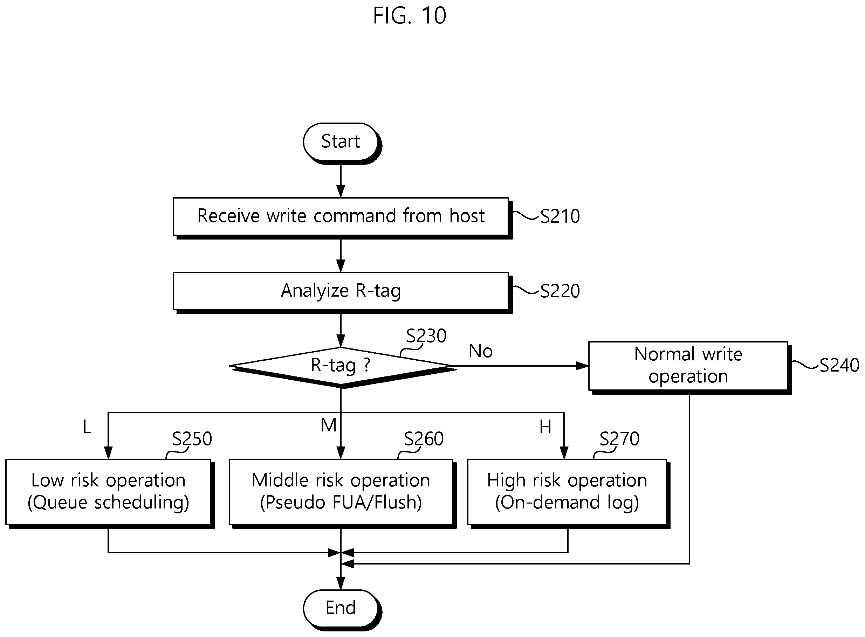

FIG. 10 is a flowchart illustrating a method for storing data according to a risk tag in a storage device according to one or more embodiments. Referring to FIG. 10, the risk data manager (1110, see FIG. 3) of the storage device 1000 may analyze the risk tag R-tag and may select a storage method of the data requested to be written to the non-volatile memory device 1200 based on the analysis result.

In operation S210, the risk data manager 1110 may receive a write command transmitted from the host or a command transmitted in a direct transmission manner.

In operation S220, the risk data manager 1110 may extract a risk tag R-tag included in the received command. The risk data manager 1110 may analyze the extracted risk tag R-tag to determine the risk of the data requested to be written.

In operation S230, the risk data manager 1110 may perform an operation branch according to the value of the risk tag R-tag. If the write command does not include the risk tag R-tag ('No' direction), the procedure may move to operation S240. On the other hand, if the write command includes the risk tag R-tag (one of 'L', 'M', and 'H'), the procedure may move to one of operations S250, S260, and S270 according to the value of the risk tag R-tag.

In operation S240, the risk data manager 1110 may store the data requested to be written in the non-volatile memory device 1200 according to a general write operation. That is, the risk data manager 1110 may consider the data requested to be written as data not related to risk, and may separate the metadata and the user data and store them in the non-volatile memory device 1200 without adjusting the write priority or write scheduling.

In operation S250, the risk data manager 1110 may perform a 'low risk operation' for storing low-risk data. The risk data manager 1110 may schedule the write priority of low-risk write data to be higher than that of previously requested general data (data that does not include a risk tag). The risk data manager 1110 may manage the metadata of low-risk write data in the same manner as general write data. The risk data manager 1110 may assign an internal stream ID for scheduling low-risk write data. The risk data manager 1110 may reschedule the priority of the write data to an urgent task or adjust it to a higher priority than other urgent tasks.

In operation S260, the risk data manager 1110 may perform a 'middle risk operation' for storing medium-risk data. The risk data manager 1110 may maintain synchronization of user data and metadata of write data of medium-risk. In addition, the risk data manager 1110 may perform a management operation to quickly flush the write data to the non-volatile memory device 1200. The risk data manager 1110 may select one of the meta units (journal data and metadata) configured in a write buffer, the size of the journal data of which is greater than or equal to a threshold value TH. The journal of the write data may be inserted into the selected meta unit to complete the meta unit configuration, and the configured meta unit may be flushed to the non-volatile memory device 1200. If there is no meta unit among the meta units whose number of journal data is greater than or equal to the threshold value TH, the journal of the data requested to be written may be inserted by selecting the meta unit having the largest number of journals. In this case, the flushing of the accident data may be possible in an activated state without input/output being blocked by using the namespace of the write data. The flush operation of the accident data in the state where such input/output is activated may be referred to as 'pseudo FUA/Flush'.

In operation S270, the risk data manager 1110 may perform a 'high risk operation' for storing high-risk data. The risk data manager 1110 may configure a single write unit, i.e., an ODL, to maintain consistency between the user data and metadata of the high-risk write data. The ODL may be configured in a page unit, which is a write unit, in order to be written at high speed to a non-volatile memory device 1200. In addition, the risk data manager 1110 may store the physical address information where the generated ODL will be stored in the namespace table (1119, see FIG. 3). The ODL written in the ODL namespace table 1119 may be allocated to the memory area of the non-volatile memory device 1200 specified in the corresponding namespace without a separate address mapping procedure.

The risk data manager 1110 according to one or more embodiments may differentially process data requested to be written from the host according to a risk tag R-tag. That is, the risk data manager 1110 may apply a different storage method to the data requested to be written according to a risk tag R-tag. Therefore, the storage efficiency and data reliability of the accident data stored in the storage device 1000 may be improved.

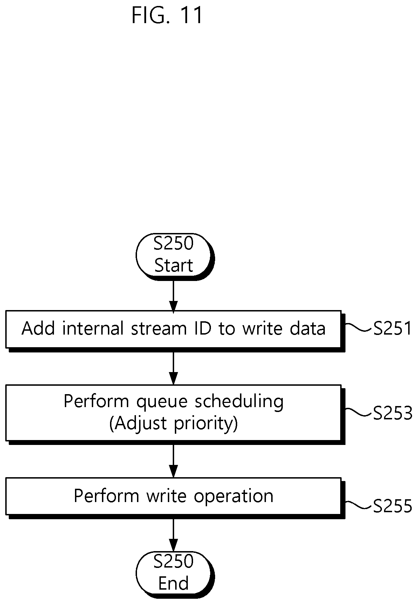

FIG. 11 is a flowchart illustrating operation S250 according to one or more embodiments. Referring to FIG. 11, the risk data manager (1110, see Fig. 3) may perform a low risk operation for storing low-risk data.

In operation S251, the risk data manager 1110 may generate an internal stream ID for low-risk write data. If an internal stream ID is assigned to low-risk write data, management may be possible by stream unit.

In operation S253, the risk data manager 1110 may perform queue scheduling for write streams. That is, the risk data manager 1110 may set the write priority of write streams higher than general data (data that does not include a risk tag) that already exists in the queue. The risk data manager 1110 may manage the metadata of low-risk write data in the same manner as general write data. The risk data manager 1110 may reschedule the priority of the write data to an urgent task or adjust it to a higher priority than other urgent tasks.

In operation S255, the risk data manager 1110 may store the write streams in the non-volatile memory device 1200 according to the adjusted priority. The risk data manager 1110 may manage the metadata and user data of the low-risk write data in the same manner as general data. However, the program order of the low-risk write data to the non-volatile memory device 1200 may be faster than that of the general data or the urgent data according to the adjusted priority.

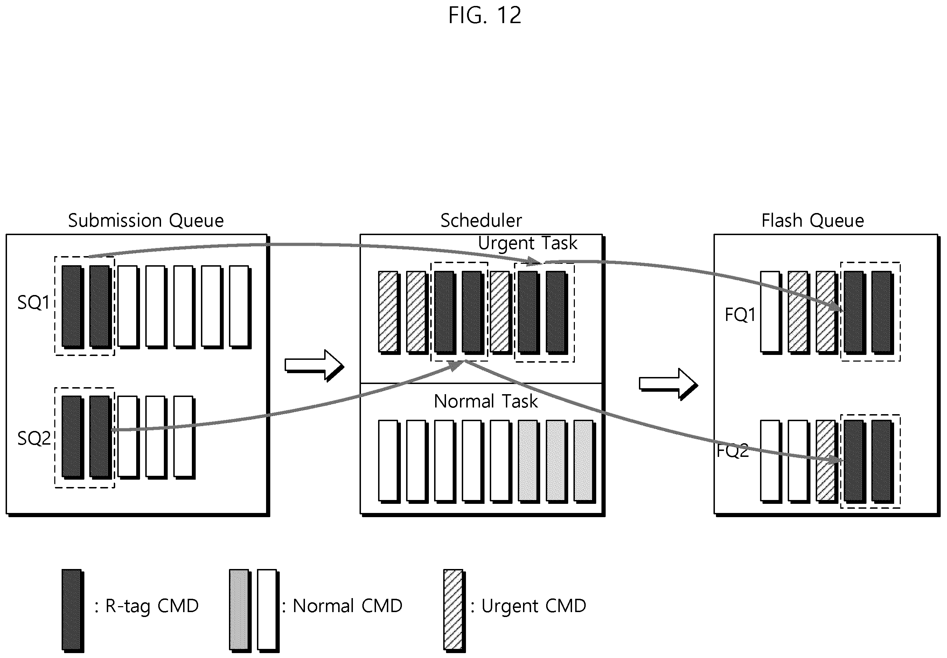

FIG. 12 is a diagram illustrating an example of write scheduling for low-risk write data according to one or more embodiments. Referring to FIG. 12, the submission queue of the host for low-risk write data may be adjusted by rescheduling performed in the storage device 1000.

A request for low-risk write data from the host may be issued as a command including a risk tag R-tag. Two submission queues SQ1 and SQ2 from the host may be loaded with write commands including two risk tags R-tags, respectively.

The storage device 1000 may read two low-risk tag R-tag commands loaded in the two submission queues SQ1 and SQ2 from the host. Then, the storage device 1000 may assign an internal stream ID to each of the low-risk tag R-tag commands. Using the internal stream ID, the storage controller 1100 may perform rescheduling of the low-risk tag R-tag commands. For example, the storage controller 1100 may classify low-risk tag R-tag commands into an urgent task group and provide a higher write priority than commands in the normal task group. In addition, the storage controller 1100 may schedule low-risk tag R-tag commands to have the highest priority within the urgent task group. In this case, some adjustments may be made to prevent other urgent task commands from being excessively delayed. For example, the ratio of commands assigned to the highest priority within the urgent task group may be set to 2:1 for low-risk tag R-tag commands and urgent task commands.

The low-risk tag R-tag commands rescheduled by the scheduler may then assigned to flash queues FQ1 and FQ2. The write data corresponding to the low-risk tag R-tag may be programmed into the non-volatile memory device 1200 according to the highest write order as a result. The writing of metadata of the write data corresponding to the low-risk tag R-tag may be processed according to the general method in which metadata and user data are separated.

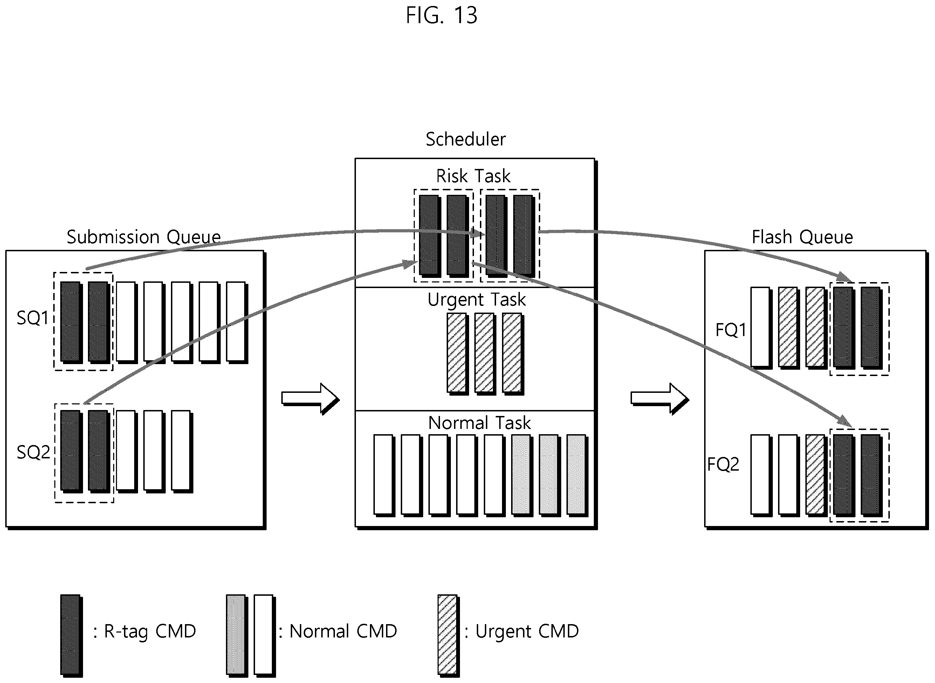

FIG. 13 is a diagram illustrating an example of write scheduling for low-risk write data according to one or more embodiments. Referring to FIG. 13, the submission queue of the host for low-risk write data may be adjusted by rescheduling performed in the storage device 1000. A risk task group for low-risk write data may be managed separately in the scheduler.

A request for low-risk write data from the host may be issued as a command including a risk tag R-tag. Two submission queues SQ1 and SQ2 in the host may be loaded with write commands including two risk tags R-tags, respectively.

The storage device 1000 may read two low-risk tag R-tag commands loaded in two submission queues SQ1 and SQ2 from the host. The storage device 1000 may assign an internal stream ID to each of the low-risk tag R-tag commands. Using the internal stream ID, the storage controller 1100 may classify the low-risk tag R-tag commands into a risk task group with a higher priority than an urgent task group. The storage controller 1100 may assign the highest priority to the low-risk tag R-tag commands.

The low-risk tag R-tag commands rescheduled by the scheduler may then assigned to the flash queues FQ1 and FQ2. The write data corresponding to the low-risk tag R-tag may be programmed into the non-volatile memory device 1200 according to the highest write order as a result. The metadata writing of the write data corresponding to the low-risk tag R-tag may be processed according to the general method in which the metadata and user data are separated.

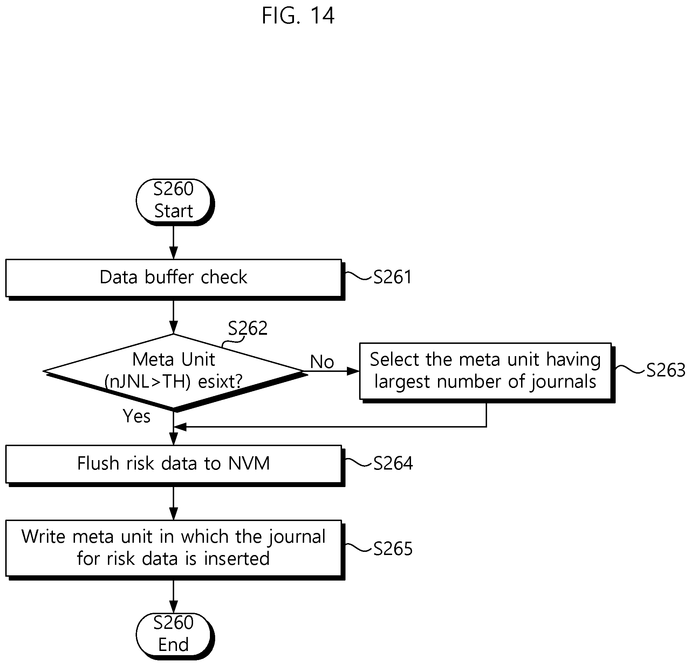

FIG. 14 is a flowchart illustrating operation S260 according to one or more embodiments. Referring to FIG. 14, the risk data manager (1110, see FIG. 3) may perform a middle risk operation for storing medium-risk data.

In operation S261, the risk data manager 1110 may check the status of the data buffer of the buffer memory 1300 in which the meta unit is configured. A meta unit whose number of journals exceeds the threshold TH among the plurality of meta units may be detected.

In operation S262, the risk data manager 1110 may determine whether a meta unit whose number of journals exceeds the threshold TH exists among the plurality of meta units. If there is no meta unit whose number of journals nJNL exceeds the threshold TH ('No' direction), the procedure may move to operation S263. On the other hand, if there is a meta unit whose number of journals nJNL exceeds the threshold TH ('Yes' direction), the procedure may move to operation S264.

In operation S263, the risk data manager 1110 may select a meta unit with the largest number of journals among multiple meta units. The risk data manager 1110 may insert a journal of data requested to be written into the selected meta unit.

In operation S264, the risk data manager 1110 may flush the risk data requested to be written into the non-volatile memory device 1200.

In operation S265, the risk data manager 1110 may insert a journal of data requested to be written into the selected meta unit to complete the configuration of the meta unit, and write the meta unit whose configuration is completed into the non-volatile memory device 1200.

In the above middle risk operation, an input/output request using the namespace of the write data may be maintained in an active state without being blocked.

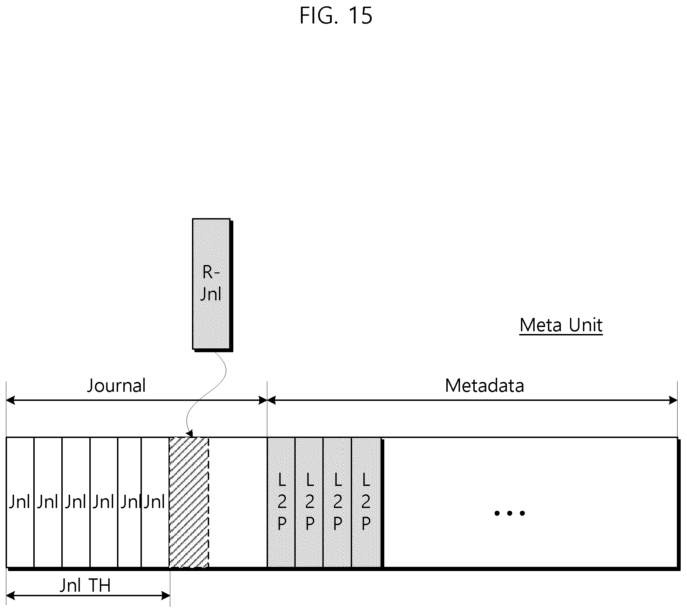

FIG. 15 is a diagram illustrating a method of adding a journal of risk data to a meta unit whose number of journals exceeds a threshold among meta units according to one or more embodiments. Referring to FIG. 15, when a meta unit whose number of journals exceeds the threshold TH is selected, a risk data manager 1110 may create a journal 'R-Jnl' of risk data requested to be written and inserts it into a journal buffer. The meta unit into which the journal 'R-Jnl' of risk data is inserted may then be stored in a non-volatile memory device 1200.

On the other hand, when there is no meta unit whose number of journals exceeds the threshold TH, a meta unit with the largest number of journals among a plurality of meta units may be selected. Then, the journal 'R-Jnl' of risk data requested to be written may be inserted into the selected meta unit. The meta unit into which the journal 'R-Jnl' of risk data is inserted may be updated in the non-volatile memory device 1200.

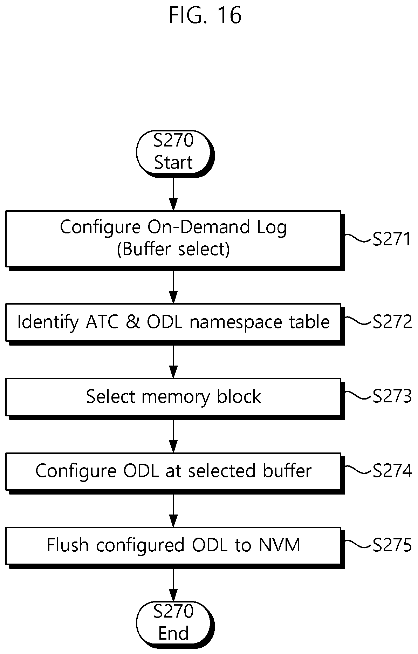

FIG. 16 is a flowchart illustrating operation S270 according to one or more embodiments. Referring to FIG. 16, the risk data manager (1110, see FIG. 3) may perform a high risk operation for storing high-risk data.

In operation S271, the risk data manager 1110 may analyze the risk tag R-tag transmitted from a host. If the analysis result of the risk tag R-tag corresponds to high-risk data, the risk data manager 1110 may configure an ODL, which is a single writing unit, to maintain the consistency of user data and metadata of the high-risk data. To configure the ODL, the generator 1115 may a buffer area of a certain size in the buffer memory 1300.

In operation S272, the risk data manager 1110 may identify the address translation cache (ATC) or the ODL namespace table 1119 for writing the ODL generated in operation S271 to the non-volatile memory device 1200. The ATC or the ODL namespace table 1119 has the ODL namespace area (1215, see FIG. 4) of the non-volatile memory device 1200 allocated to the ODL. The risk data manager 1110 may obtain physical address information for the ODL namespace area 1215 from the address translation cache ATC or the ODL namespace table 1119.

In operation S273, the risk data manager 1110 may select a memory block to store the ODL according to the address information obtained from the address translation cache ATC or the ODL namespace table 1119. The memory block for storing the ODL may be selected from any of the free blocks. Alternatively, a memory block pre-allocated for storing the ODL may be selected.

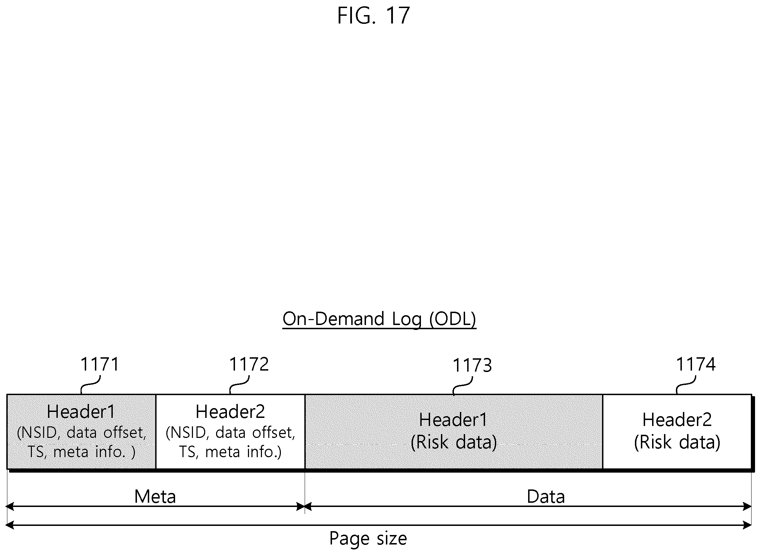

In operation S274, the risk data manager 1110 may configure the ODL, which is a single writing unit for maintaining the consistency of user data and metadata of high-risk data. That is, the risk data manager 1110 may configure the ODL that includes both metadata and user data of high-risk data in the buffer area selected in operation S271. The size of the ODL may be the page size, which is the write unit of the non-volatile memory device 1200. The configuration method of the ODL will be described in more detail in FIG. 17 described below.

In operation S275, the risk data manager 1110 may flush the ODL configured in the designated buffer area to the ODL namespace area 1215 of the non-volatile memory device 1200. The ODL configured in the page size may be written to the non-volatile memory device 1200 as fast as possible. A method that provides the fastest program speed may be selected as the method in which the ODL is programmed in the non-volatile memory device 1200.

FIG. 17 is a diagram illustrating an example of a method of configuring an on-demand log performed in operation S274 according to one or more embodiments. Referring to FIG. 17, the ODL may be generated in the size of a page unit from high-risk data provided from multiple hosts. Here, for convenience of explanation, an example in which high-risk data provided from two hosts (the first host and the second host) are configured as one ODL will be described.

The high-risk data provided from the first host may be configured as the first header (Header1, 1171 and 1173) of the ODL. The first header Header1 may be configured with the first meta field 1171 and the first data field 1173. The first meta field 1171 may include a namespace identifier NSID assigned to the ODL, a data offset, a time stamp TS, and meta information including a journal and metadata. Here, the data offset may be a value indicating the length or size of the first data field 1173 in the ODL. The first data field 1173 may store high-risk data, which is user data requested to be written by the first host.

The high-risk data provided from the second host may include the second header (Header2, 1172 and 1174) of the ODL. The second header Header2 may include the second meta field 1172 and the second data field 1174. The second meta field 1172 may include a namespace identifier NSID, data offset, a time stamp TS, and meta information including a journal and metadata assigned to the ODL. Here, the data offset may be a value indicating the length or size of the second data field 1174 in the ODL. The second data field 1174 may store high-risk data, which is user data requested to be written by the second host.

The illustrated ODL has been described as an example in which high-risk data requested to be written from two hosts is composed of one write unit. However, embodiments are not limited thereto. The ODL may be composed of two or more page units. Additionally, ODL may include high-risk data from one host or three or more hosts.

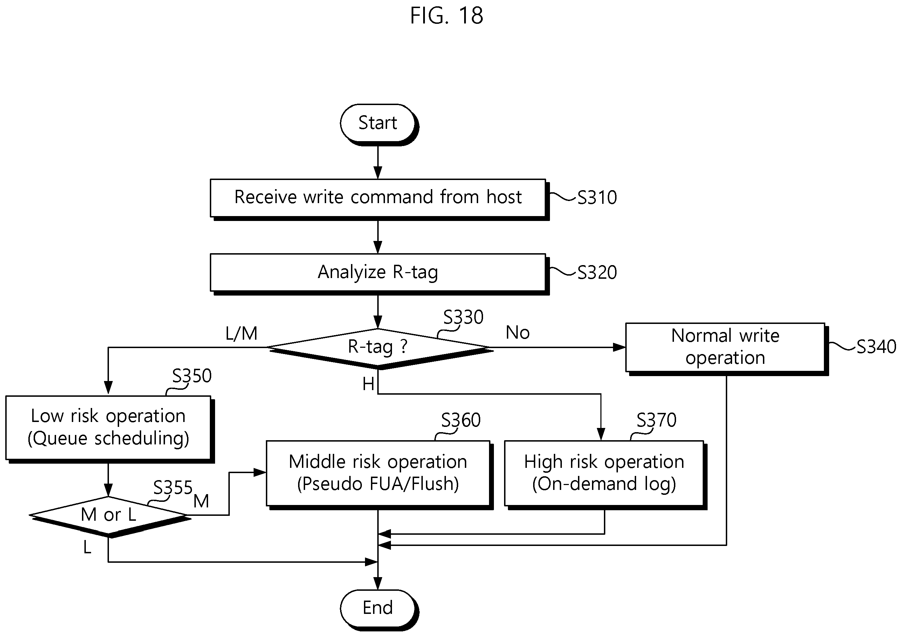

FIG. 18 is a flowchart illustrating an example of a data storage method according to a risk tag in a storage device according to one or more embodiments. Referring to FIG. 18, a risk data manager (1110, see FIG. 3) may analyze the risk tag R-tag and select a storage method of the data requested to be written to a non-volatile memory device 1200 based on the analysis result. In one or more embodiments, the middle risk operation is differentiated from the embodiment of FIG. 10 in that it is performed after the low risk operation is performed.

In operation S310, the risk data manager 1110 may receive a write command transmitted from a host or a command transmitted in a direct transmission manner.

In operation S320, the risk data manager 1110 may extract the risk tag R-tag included in the received command. The risk data manager 1110 may analyze the extracted risk tag R-tag to determine the risk level of the data requested to be written.

In operation S330, the risk data manager 1110 may perform an operation branch according to the value of the risk tag R-tag. If the write command does not include the risk tag R-tag ('No' direction), the procedure may move to operation S340. On the other hand, if the write command includes a low-risk or medium-risk tag (L or M), the procedure may move to operation S350. If the write command includes a high-risk tag H, the procedure may move to operation S370.

In operation S340, the risk data manager 1110 may store the data requested to be written in the non-volatile memory device 1200 according to a normal write operation. That is, the risk data manager 1110 may consider the data requested to be written as data not related to risk, and may store the metadata and user data separately in the non-volatile memory device 1200 without adjusting the write priority or scheduling.

In operation S350, the risk data manager 1110 may perform a low risk operation for storing low-risk data. The risk data manager 1110 may schedule the write priority of low-risk write data to be higher than the write priority of general data (data that does not include the risk tag) previously requested to be written. The risk data manager 1110 may manage the metadata of low-risk write data in the same manner as general write data. The risk data manager 1110 may assign an internal stream ID for scheduling the low-risk write data. The risk data manager 1110 may reschedule the priority of the write data to an urgent task or adjust it to a higher priority than other urgent tasks.

In operation S355, the risk data manager 1110 may perform an operation branch depending on whether the received risk tag R-tag is low risk L or medium risk M. If the risk tag R-tag of the write command corresponds to low risk L ('L' direction), the procedure may be terminated. On the other hand, if the risk tag R-tag of the write command corresponds to medium risk M ('M' direction), the procedure may move to operation S360.

In operation S360, the risk data manager 1110 may perform the middle risk operation for storing medium risk data. The risk data manager 1110 may maintain synchronization of user data and metadata of medium risk write data. In addition, the risk data manager 1110 may perform a management operation for quickly flushing the write data to the non-volatile memory device 1200. The risk data manager 1110 may select a meta unit whose journal data size is greater than or equal to a threshold from among the meta units (journal data and metadata) configured in the write buffer. The meta unit may be configured by inserting a journal of the write data into the selected meta unit, and the configured meta unit may be flushed to the non-volatile memory device 1200. If there is no meta unit whose journal data size is greater than or equal to the threshold among the meta units, the journal of the data requested to be written may be inserted by selecting the meta unit with the largest amount of journal data. In this case, flushing of the accident data may be possible while the input/output using the namespace of the write data is not blocked and is activated.

In operation S370, the risk data manager 1110 may perform a high risk operation for storing high-risk data. The risk data manager 1110 may configure a single write unit, i.e., an ODL, to maintain consistency between the user data and the metadata of the high-risk write data. The ODL may be configured in page units, which are write units, in order to be written at high speed to the non-volatile memory device 1200. Then, the risk data manager 1110 may store the physical address information where the generated ODL will be stored in the namespace table (1119, see FIG. 3). The ODL written in the ODL namespace table 1119 may be allocated to the memory area of the non-volatile memory device 1200 specified in the corresponding namespace without a separate address mapping procedure.

The risk data manager 1110 according to one or more embodiments may differentially process data requested to be written from a host according to a risk tag R-tag. That is, the risk data manager 1110 may select/perform a different storage method to the data requested to be written according to a risk tag R-tag. Therefore, the storage efficiency and data reliability of accident data stored in the storage device 1000 may be increased.

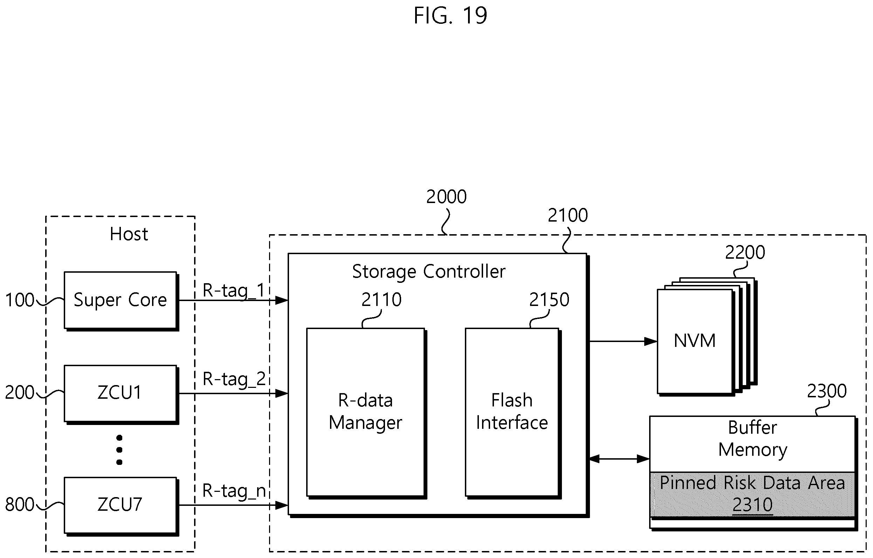

FIG. 19 is a block diagram illustrating a storage device according to one or more embodiments. Referring to FIG. 19, the storage device 2000 may receive a write request including a risk tag R-tag from a plurality of processors 100 to 800 corresponding to a host. In particular, the storage device 2000 may include a buffer memory 2300 having a separate fixed area (pinned risk data area) 2310 for writing risk data. Except for further including a buffer memory 2300 having a separate fixed area 2310 for writing risk data, the storage device 2000 may be substantially the same as the storage device 1000 of FIG. 2. Therefore, the description of the host 100 to 800 and the non-volatile memory device 2200 will be omitted.

By using the buffer memory 2300 having a separate fixed area 2310 for entering risk data, the efficiency of risk data management within the storage device 2000 of the risk data manager 2110 may be improved.

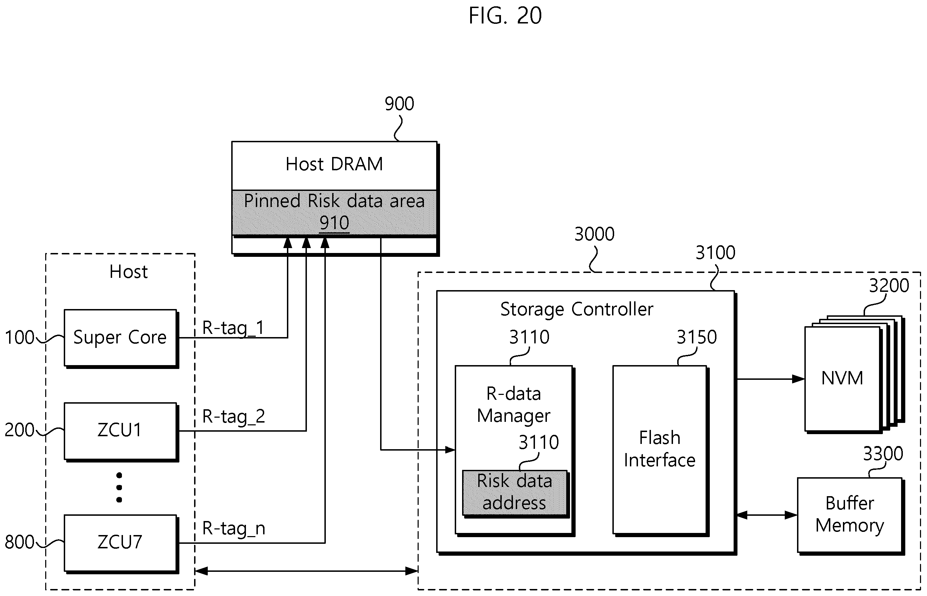

FIG. 20 is a block diagram illustrating a storage device according to one or more embodiments. Referring to FIG. 20, the storage device 3000 may receive a write request including a risk tag R-tag from a plurality of processors 100 to 800 corresponding to the host. In particular, the storage device 3000 may access host DRAM 900 using the ATC of the host.

The ATC may refer to a technology that caches the virtual memory address of the host into a physical address. Therefore, the address translation process for the virtual memory address may be omitted and the host DRAM 900 may be accessed directly using the cached physical address, thereby enabling fast data transmission. In addition, the host DRAM 900 may be assigned a fixed risk data area (pinned risk data area) 910. When an ATC for a fixed risk data area 910 is used in the storage controller 3100, the transmission speed of risk data stored in the fixed risk data area 910 may be increased. That is, the risk data manager 3110 may receive risk data from the host DRAM 900 without overhead for address translation by utilizing the physical address of the fixed risk data area 910. To this end, the risk data manager 3110 may include a risk data address 3110 for managing the physical address of the fixed risk data area 910. The storage device 3000 may be substantially the same as the storage device 1000 of FIG. 2, except that it may use the ATC function. Therefore, the description of the host 100 to 800, the non-volatile memory device 3200, and the buffer memory 3300 will be skipped. The ATC function may improve the performance of critical data exchange between host DRAM 900 and storage device 3000.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

At least one of the devices, units, components, modules, units, or the like represented by a block or an equivalent indication in the above embodiments may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein).

Each of the embodiments provided in the above description is not excluded from being associated with one or more features of another example or another embodiment also provided herein or not provided herein but consistent with the disclosure.

While the disclosure has been particularly shown and described with reference to embodiments thereof, it will be understood that various changes in form and details may be made therein without departing from the scope of the following claims.

**Claims**

1.    A storage device configured to receive write data from at least one processor (100-800) corresponding to an autonomous vehicle (10):

a memory (1200; 2200; 3200); and
a storage controller (1100; 2100; 3100) configured to:

receive, from the at least one processor (100-800), the write data and an accident risk tag corresponding to the write data, the accident risk tag corresponding to an accident risk level of the autonomous vehicle (10), wherein the accident risk tag corresponds to at least one of a first accident risk level corresponding to a high accident risk, a second accident risk level corresponding to an accident risk lower than the first accident risk level, and a third accident risk level corresponding to an accident risk lower than the second accident risk level;
select (S230) a storage method (S240, S250, S260, S270) for storing the write data on the memory (1200; 2200; 3200) based on the accident risk tag; and
store the write data on the memory (1200; 2200; 3200) based on the selected storage method (S240, S250, S260, S270).

2.    The storage device of claim 1, wherein, based on the accident risk tag corresponding to the first accident risk level, the storage controller (1100; 2100; 3100) is configured to select a first storage method (S270) for storing the write data on the memory (1200; 2200; 3200), and
wherein, in the first storage method (S270), the storage controller (1100; 2100; 3100) is configured to configure the write data and a metadata of the write data as an on-demand log, the on-demand log being a single write unit, and store the on-demand log on the memory (1200; 2200; 3200).

3. The storage device of claim 2, wherein the on-demand log is configured as a page size unit corresponding to a write unit of the memory (1200; 2200; 3200).

4. The storage device of claim 3, wherein the memory (1200; 2200; 3200) comprises a namespace area (1215) configured to store the on-demand log.

5. The storage device of any one of claims 1 to 4, wherein, based on the accident risk tag corresponding to the third accident risk level, the storage controller (1100; 2100; 3100) is configured to select a second storage method for storing the write data on the memory (1200; 2200; 3200), and
wherein, in the second storage method, the storage controller (1100; 2100; 3100) is configured to assign an internal stream identifier to the write data and adjust a write priority of the write data.

6. The storage device of any one of claims 1 to 5, wherein, based on the accident risk tag corresponding to the second accident risk level, the storage controller (1100; 2100; 3100) is configured to select a third storage method for storing the write data on the memory (1200; 2200; 3200), and
wherein, in the third storage method, the storage controller (1100; 2100; 3100) is configured to:

   select a meta unit in a buffer memory (1300; 2300; 3300) having a number of journals exceeding a threshold value;
   insert journal data of the write data into the selected meta unit; and
   store the write data and the selected meta unit on the memory (1200; 2200; 3200).

7. The storage device of claim 6, wherein, based on no meta unit among the meta units having a number of journals that exceeds the threshold value, the storage controller (1100; 2100; 3100) is further configured to insert the journal data into a meta unit, among the meta units, having a largest number of journals.

8. The storage device of any one of claims 1 to 7, further comprising a buffer memory (1300; 2300; 3300) in which the write data and metadata of the write data are stored,
wherein the storage controller (1100; 2100; 3100) is further configured to manage an area of the buffer memory (1300; 2300; 3300) in which the write data is stored as an address translation cache.

9. A method of a storage device, comprising:

   receiving (S210), from a host, a write command and accident data comprising a risk tag;
   determining (S220) an accident risk level based on the risk tag, wherein the accident risk level corresponds to at least one of a first accident risk level corresponding to a high accident risk, a second accident risk level corresponding to an accident risk lower than the first accident risk level, and a third accident risk level corresponding to an accident risk lower than the second accident risk level;
   selecting (S230) a storage method (S240, S250, S260, S270) for storing the accident data on a memory (1200; 2200; 3200) based on the accident risk level; and
   storing the accident data on the memory (1200; 2200; 3200) based on the selected storage method (S240, S250, S260, S270).

10. The method of claim 9, wherein the selecting (S230) the storage method for storing the accident data on the memory (1200; 2200; 3200) comprises:
based on the accident risk level corresponding to the third accident risk level, selecting a first storage method (S250) for storing the accident data on the memory (1200; 2200; 3200), the first storage method (S250) comprising adjusting (S253) a write priority of the accident data to be higher than a write priority of general data.

11. The method of claim 10, wherein the adjusting the write priority of the accident data comprises assigning an internal stream identifier to the write data.

12. The method of any one of claims 9 to 11, wherein the selecting (S230) the storage method for storing the accident data on the memory (1200; 2200; 3200) comprises:
based on the accident risk level corresponding to the second accident risk level, selecting a second storage method (S260) for storing the accident data on the memory (1200; 2200; 3200), the second storage method (S260) comprising:

selecting a meta unit having a number of journals that exceeds a threshold;
inserting journal data of the write data into the selected meta unit; and
storing the write data and the selected meta unit on the memory (1200; 2200; 3200).

13. The method of claim 12, wherein the second storage method (S260) further comprises, based on no meta unit having a number of journals exceeding the threshold, selecting (S263) a meta unit among meta units having a largest number of journals.

14. The method of any one of claims 9 to 13, wherein the selecting (S230) the storage method for storing the accident data on the memory (1200; 2200; 3200) comprises, based on the accident risk level corresponding to the first accident risk level, selecting a third storage method (S270) for storing the accident data on the memory (1200; 2200; 3200), the third storage method (S270) comprising configuring (S271) the accident data and metadata of the accident data into an on-demand log, the on-demand log being a single write unit, and storing the on-demand log on the memory (1200; 2200; 3200).

15. The method of claim 14, wherein the on-demand log is configured as a page size unit corresponding to a write unit of the memory (1200; 2200; 3200).

FIG. 1

EP 4 704 056 A1

FIG. 2

EP 4 704 056 A1

# FIG. 3

R-Data Manager (1110) (1100)
- Tag-Analyzer (1111)
- Storing Manager (1113): LDC, MDC, HDC
- ODL Generator (1115)
- ODL Migrator (1117)
- ODL Namespace Table (1119)

Host I/F (1120) — inputs R-tag_1, R-tag_2, ... R-tag_n
Processing Unit (1130)
Working Memory (1140)
Buffer Manager (1150) — Buffer Memory (1300)
Flash I/F (1160) — NVMs

EP 4 704 056 A1

## FIG. 4

EP 4 704 056 A1

FIG. 5

## FIG. 6

Common Command Format

# FIG. 7

<u>Opcode</u>

| Opcode by Field | | | Combined Opcode (hex) | Command |
|---|---|---|---|---|
| [7] Standard Command | [6:2] Function | [1:0] Data Transfer | | |
| 0b | 000 00b | 00b | 00h | Flush |
| 0b | 000 00b | 01b | 01h | Write |
| 0b | 000 00b | 10b | 02h | Read |
| 0b | 000 01b | 00b | 04h | Write Uncorrectable |
| 0b | 000 01b | 01b | 05h | Flush |
| 0b | 000 10b | 00b | 08h | Write |
| 0b | 000 10b | 01b | 09h | Read |
| 0b | 000 11b | 00b | 0Ch | Write Uncorrectable |
| 0b | 000 11b | 01b | 0Dh | Flush |
| 0b | 000 11b | 10b | 0Eh | Write |
| 0b | 001 00b | 01b | 11h | Read |
| 0b | 001 01b | 01b | 15h | Write Uncorrectable |
| 0b | 001 10b | 01b | 19h | Flush |
| 0b | 010 00b | 01b | 21h | Write(Low) |
| 0b | 100 00b | 01b | 41h | Write(Middle) |
| 0b | 110 00b | 01b | 61h | Write(High) |
| Vendor Specific | | | | |
| 1b | n/a | - | 80h to FFh | Vendor specific |

R-tag

# FIG. 8

Directive Send – Command Dword 11

| Bits | Description |
|---|---|
| 31:16 | **Directive Specific (DSPEC)** : This field is Directive Type dependent. |
| 15:08 | **Directive Type (DTYPE)** : This field specifies the Directive Type. |
| 07:00 | **Directive Operation (DOPER)** : This field specifies the Directive Operation to perform. This field is Directive Type dependent. |

| Bits | Definition |
|---|---|
| 0x11 | Risk Low |
| 0x12 | Risk Middle |
| 0x13 | Risk High |
| 0x33 | Reserved for other Risk degree |

EP 4 704 056 A1

# FIG. 9

```
                    ┌──────────┐
                    │  Start   │
                    └────┬─────┘
                         │
                         ▼
         ┌───────────────────────────────┐
         │ Check whether the storage device│ ~S110
         │        supports R-tag          │
         └───────────────┬───────────────┘
                         │
                         ▼         S120
                      ◇─────────◇      No    ┌──────────────────────────────┐
                      │ R-tag support? │ ──────▶│ Send command without R-tag   │ ~S140
                      ◇─────────◇            └──────────────┬───────────────┘
                         │ Yes                              │
                         ▼                                  │
         ┌───────────────────────────────┐                 │
         │   Send command with R-tag     │ ~S130           │
         └───────────────┬───────────────┘                 │
                         │◀────────────────────────────────┘
                         ▼
                    ┌──────────┐
                    │   End    │
                    └──────────┘
```

# FIG. 10

Start

Receive write command from host — S210

Analyize R-tag — S220

R-tag ? — S230

No → Normal write operation — S240

L → Low risk operation (Queue scheduling) — S250

M → Middle risk operation (Pseudo FUA/Flush) — S260

H → High risk operation (On-demand log) — S270

End

# FIG. 11

```
        ┌─────────┐
        │  S250   │
        │  Start  │
        └────┬────┘
             │
             ▼
┌──────────────────────────────┐
│ Add internal stream ID to write data │ ─── S251
└──────────────┬───────────────┘
               │
               ▼
┌──────────────────────────────┐
│   Perform queue scheduling    │ ─── S253
│      (Adjust priority)        │
└──────────────┬───────────────┘
               │
               ▼
┌──────────────────────────────┐
│    Perform write operation    │ ─── S255
└──────────────┬───────────────┘
               │
               ▼
        ┌─────────┐
        │  S250   │
        │   End   │
        └─────────┘
```

# FIG. 12

Submission Queue

SQ1

SQ2

Scheduler

Urgent Task

Normal Task

Flash Queue

FQ1

FQ2

█ : R-tag CMD    ▓ ▯ : Normal CMD    ╱ : Urgent CMD

EP 4 704 056 A1

# FIG. 13

Scheduler

Risk Task

Submission Queue

Urgent Task

Flash Queue

SQ1

SQ2

Normal Task

FQ1

FQ2

▮ : R-tag CMD

▨▯ : Normal CMD

▨ : Urgent CMD

EP 4 704 056 A1

FIG. 14

S260 Start

Data buffer check — S261

S262 — Meta Unit (nJNL>TH) esixt?

No → Select the meta unit having largest number of journals — S263

Yes → Flush risk data to NVM — S264

Write meta unit in which the journal for risk data is inserted — S265

S260 End

FIG. 15

# FIG. 16

```
              ┌──────────┐
              │  S270    │
              │  Start   │
              └────┬─────┘
                   │
                   ▼
   ┌───────────────────────────────┐
   │   Configure On-Demand Log     │ ───S271
   │      (Buffer select)          │
   └───────────────┬───────────────┘
                   │
                   ▼
   ┌───────────────────────────────┐
   │ Identify ATC & ODL namespace table │ ───S272
   └───────────────┬───────────────┘
                   │
                   ▼
   ┌───────────────────────────────┐
   │      Select memory block      │ ───S273
   └───────────────┬───────────────┘
                   │
                   ▼
   ┌───────────────────────────────┐
   │  Configure ODL at selected buffer │ ───S274
   └───────────────┬───────────────┘
                   │
                   ▼
   ┌───────────────────────────────┐
   │   Flush configured ODL to NVM │ ───S275
   └───────────────┬───────────────┘
                   │
                   ▼
              ┌──────────┐
              │  S270    │
              │  End     │
              └──────────┘
```

EP 4 704 056 A1

# FIG. 17

EP 4 704 056 A1

On-Demand Log (ODL)

| 1171 | 1172 | 1173 | 1174 |
| Header1 (NSID, data offset, TS, meta info. ) | Header2 (NSID, data offset, TS, meta info.) | Header1 (Risk data) | Header2 (Risk data) |

Meta | Data

Page size

# FIG. 18

```
                          ┌─────────┐
                          │  Start  │
                          └────┬────┘
                               │
                               ▼
          ┌──────────────────────────────────────────┐
          │    Receive write command from host       │──S310
          └────────────────────┬─────────────────────┘
                               │
                               ▼
          ┌──────────────────────────────────────────┐
          │              Analyize R-tag              │──S320
          └────────────────────┬─────────────────────┘
                               │        S330
         L/M                   ▼                No         ┌──────────────────┐
     ┌─────────────────< R-tag ? >──────────────────────▶ │  Normal write    │──S340
     │              S350        │                          │   operation      │
     │                          │ H                        └────────┬─────────┘
     ▼                          │                                   │
┌────────────────────┐         │                                   │
│ Low risk operation │         │                                   │
│ (Queue scheduling) │         │       S360          S370           │
└─────────┬──────────┘         │                                   │
          │                    ▼                    ▼               │
          ▼     S355 M   ┌──────────────────┐ ┌──────────────────┐ │
     ┌─────────┐    ─────▶│ Middle risk      │ │ High risk        │ │
     │ M or L  │          │ operation        │ │ operation        │ │
     └────┬────┘          │ (Pseudo FUA/     │ │ (On-demand log)  │ │
          │ L             │  Flush)          │ └────────┬─────────┘ │
          │               └────────┬─────────┘          │           │
          │                        │◀───────────────────┘           │
          │                        │◀───────────────────────────────┘
          └────────────────────────▶│
                                   ▼
                              ┌─────────┐
                              │   End   │
                              └─────────┘
```

EP 4 704 056 A1

# FIG. 19

FIG. 20

Europäisches
Patentamt

European
Patent Office

Office européen
des brevets

## EUROPEAN SEARCH REPORT

**Application Number**

EP 25 19 5068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/157092 A1 (JIA XIAOLIN [CN]) 19 May 2022 (2022-05-19) * abstract * * * figures 1-3 * * paragraph [0003] - paragraph [0045] * * paragraph [0064] - paragraph [0140] * ----- | 1-15 | INV. G07C5/08 |
| A | US 2024/249623 A1 (GOLOV GIL [DE]) 25 July 2024 (2024-07-25) * the whole document * * ----- | 1-15 | |
| A | US 2024/069726 A1 (VIRANI SCHEHERESADE [US] ET AL) 29 February 2024 (2024-02-29) * the whole document * * ----- | 1-15 | |

TECHNICAL FIELDS
SEARCHED (IPC)

G07C

The present search report has been drawn up for all claims

| Place of search | Date of completion of the search | Examiner |
|---|---|---|
| The Hague | 22 December 2025 | Pañeda Fernández, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 704 056 A1**

## ANNEX TO THE EUROPEAN SEARCH REPORT
## ON EUROPEAN PATENT APPLICATION NO.

EP 25 19 5068

22-12-2025

| Patent document cited in search report | | Publication date | Patent family member(s) | | Publication date |
|---|---|---|---|---|---|
| US 2022157092 | A1 | 19-05-2022 | CN | 110570538 A | 13-12-2019 |
| | | | EP | 4009291 A1 | 08-06-2022 |
| | | | US | 2022157092 A1 | 19-05-2022 |
| | | | WO | 2021022818 A1 | 11-02-2021 |
| US 2024249623 | A1 | 25-07-2024 | CN | 115398496 A | 25-11-2022 |
| | | | EP | 4100929 A1 | 14-12-2022 |
| | | | KR | 20220133934 A | 05-10-2022 |
| | | | US | 2021245659 A1 | 12-08-2021 |
| | | | US | 2024249623 A1 | 25-07-2024 |
| | | | WO | 2021158655 A1 | 12-08-2021 |
| US 2024069726 | A1 | 29-02-2024 | US | 2024069726 A1 | 29-02-2024 |
| | | | US | 2024345730 A1 | 17-10-2024 |

EPO FORM P0459